# EUROPÄISCHE PATENTSCHRIFT

(11) **EP 2 198 071 B1**
(45) Veröffentlichungstag und Bekanntmachung des Hinweises auf die Patenterteilung: **04.01.2012**
(21) Anmeldenummer: 08802344.5
(22) Anmeldetag: 18.09.2008
(51) Int. Cl.: C23C 18/06, B01J 37/00, B01J 37/08

(54) **VERFAHREN ZUR PARTIELLEN BESCHICHTUNG VON KATALYTISCH AKTIVEN KOMPONENTEN AUF KOMPLEXEN BAUTEILEN**
METHOD FOR PARTIALLY COATING COMPLEX COMPONENTS WITH CATALYTICALLY ACTIVE COMPONENTS
PROCÉDÉ DE REVÊTEMENT PARTIEL D'ÉLÉMENTS COMPLEXES AU MOYEN DE COMPOSANTS CATALYTIQUEMENT ACTIFS

(30) Priorität: 19.09.2007 DE 102007044585
(43) Veröffentlichungstag der Anmeldung: 23.06.2010
(73) Patentinhaber: Süd-Chemie AG, 80333 München (DE)
(72) Erfinder: ANFANG, Hans-Georg, 83620 Vagen (DE); SPEYER, Thomas, 83727 Schliersee (DE)
(74) Vertreter: Stolmár Scheele & Partner
(86) Internationale Anmeldenummer: PCT/EP2008/007823
(87) Internationale Veröffentlichungsnummer: WO 2009/036977

(56) Entgegenhaltungen:
- EP-A1- 1 829 608
- US-A1- 2005 191 480

## Beschreibung

Die Erfindung betrifft ein Verfahren zur partiellen Beschichtung eines Formkörpers, dessen Oberfläche einen zu beschichtenden und einen auszusparenden Bereich umfasst, wobei der auszusparende Bereich zunächst mit einer Schutzschicht versehen wird, die aus einem Material besteht, das durch Pyrolyse rückstandsfrei entfernt wird.

Bei der Beschichtung von Bauteilen ist es oftmals wünschenswert oder erforderlich nur eine partielle Beschichtung von Bauteilen vorzunehmen und die in dem jeweiligen Beschichtungsvorgang auszusparenden Bereiche in nachfolgenden Schritten gegebenenfalls mit anderen Beschichtungsmaterialen zu versehen oder diese auszusparenden Bereiche vollkommen unbeschichtet zu belassen. So ist es beispielsweise wünschenswert Bereiche beschichtungsfrei zu halten, die beschriftet sind oder beschriftet werden sollen, beispielsweise mit einem Barcode. Es kann auch erforderlich sein, Bereiche um Durchtrittsöffnungen beispielsweise für Messsonden oder Bereiche um Sackbohrungen, an denen Schraubverbindungen angebracht werden sollen, unbeschichtet zu belassen. Die auszusparenden Bereiche können auch für die Anbringung von elektrischen Kontakten oder für andere Zwecke vorgesehen sein.

Aus dem Stand der Technik sind Verfahren bekannt, mit denen sich partielle Beschichtungen vornehmen lassen. So beschreibt die DE-A-43 34 131 ein Verfahren, bei dem ferromagnetische Gegenstände teilweise beschichtet werden, in dem zunächst die auszusparenden Bereiche mit einer permanent magnetischen Folie versehen werden und die ferromagnetischen Gegenstände anschließend beschichtet werden. Aufgrund der magnetischen Kräfte werden die Folien dicht abdeckend an die Oberfläche des ferromagnetischen Gegenstandes angezogen. Nach der Beschichtung kann die Folie abgezogen werden und der auszusparende Bereich bleibt unbehandelt. Hierbei ist jedoch nachteilig, dass das Verfahren nur bei ferromagnetischen Materialien anwendbar ist. Ferner ist es aufwendig, die Folie nach der Beschichtung wieder zu entfernen.

Aus der DE-A-29 40 582 ist ein Verfahren zum Beschichten von Elementen mit einer Vielzahl von Öffnungen bekannt, bei dem Formstücke in die Öffnungen des zu beschichtenden Elementes eingesetzt werden, wobei das Beschichtungsmittel auf das Element in einer Dicke aufgetragen wird, die geringer ist als die überstehende Höhe der Formstücke. Die Formstücke besitzen dabei eine kegelige, pyramidenförmige oder satteldachähnliche Gestalt, wobei jeweils der Neigungswinkel der in der zugehörigen Öffnung des Elementes zur Anlage gelangenden Formfläche größer ist als derjenige, der die Öffnungen begrenzenden Elementfläche. Die Formfläche kommt hierbei linienförmig abdichtend an die Oberkante der Öffnung zur Anlage. Nachteilig bei diesem Verfahren ist, dass eine Abdeckung von weiter umgebenden Bereichen um die Öffnung herum nicht möglich ist. Ferner ist eine ausreichend sichere Anordnung der Formstücke in den Öffnungen nicht gewährleistet.

Aus der US-A-5 328 723 ist bekannt, stopfenartige Abdeckmittel zu verwenden, die einen in die Ausnehmung einführbaren konischen Abschnitt mit rundem Querschnitt aufweisen und aus einem geschäumten Thermoplasten bestehen. Mittels dieser Abdeckung ist insbesondere bei automatisierten Beschichtungen eine ausreichend zuverlässige Abdeckung der auszusparenden Bereiche nicht gewährleistet. Ferner haben die beiden zuletzt beschriebenen Verfahren des Standes der Technik den Nachteil, dass ebene, nicht mit Aussparungen oder Löchern versehene Oberflächen nicht oder nur sehr aufwendig partiell beschichtet werden können.

Ein Verfahren, das die partielle Beschichtung von ebenen Flächen ermöglicht, die nicht mit Aussparungen oder Löchern versehenen sind, ist in der DE-A-10 149 892 offenbart. Bei diesem Verfahren werden zu behandelnde Metalloberflächen partiell geschützt, indem der nicht zu behandelnde, auszusparende Bereich der Metalloberfläche zunächst mit einem als Schutzschicht wirkenden Fluid bedeckt wird. Dieses wird durch Belichtung und/oder Bestrahlung oder durch Wärmeentzug aus einem flüssigen Aggregatzustand in einem festen Aggregatzustand überführt. Anschließend erfolgt die Oberflächenbehandlung und danach wird die Schutzschicht wieder entfernt. Dieses Verfahren ist für die partielle Galvanisierung von Oberflächen entwickelt worden.

Mit diesem Verfahren können keine katalytisch aktiven Schichten partiell auf Formkörper aufgetragen werden. Die Schutzschicht, die durch Wärmeentzug aushärtet, also bei höheren Temperaturen flüssig ist, vermischt sich im flüssigen Zustand mit der aufgetragenen Washcoat-Suspension. Ferner läßt sich die Schutzschicht nicht durch Auflösen mit einem Lösungsmittel entfernen, wenn diese mit einer Washcoat-Schicht bedeckt ist. Mit Hilfe dieses Verfahrens können Formkörper nicht partiell mit einer Washcoat-Beschichtung versehen werden.

Die DE 101 49 892 A1 beschreibt ein Verfahren zum partiellen Aufbringen einer Beschichtung auf einer Metalloberfläche mittels einer Oberflächenbehandlung, insbesondere einer galvanischen Behandlung, um Bereiche mit einer Beschichtung und Bereiche ohne eine Beschichtung zu erhalten. Die nicht zu beschichtenden Teile der Metalloberfläche werden zunächst mit einem als Schutzschicht wirkenden Fluid bedeckt, das durch Belichtung und/oder Bestrahlung oder Wärmeentzug aus einem flüssigen Aggregatszustand in einen festen Aggregatszustand überführt wird, anschließend erfolgt eine Oberflächenbehandlung und danach wird die Schutzschicht wieder entfernt.

Die DE 10 2004 058 705 B3 offenbart ein Einweg-Maskierungsverfahren für ein thermisches Beschichtungsverfahren sowie ein entsprechendes thermisches Beschichtungsverfahren, wobei die Einweg-Maskierung aus in einer in Negativform miteinander verpressten befeuchteten Partikeln aufgebaut ist.

Auch die EP 1 510 592 A1 beschreibt ein partielles Verfahren zur Beschichtung eines Bauteils, wobei eine Maskierung aufgebracht wird, die zumindest teilweise aus einem Keramikpulver besteht und nach der Beschichtung des Bauteils entfernt werden kann. Eine thermische Entfernung geht aus dieser Schrift nicht hervor.

Aus der EP 1 829 608 ist ein Verfahren bekannt, bei dem Reaktorlagen, welche Fügebereiche sowie Durchführungsbereiche aufweisen, in den Fügebereichen mit einer Abdecklack maskiert werden und in den Durchführungsbereichen mit einem Katalysator im Washcoat-verfahren beladen werden. Anschließend wird die Abdeckung chemisch entfernt und schließlich werden die Reaktorlagen gefügt.

Die US 2005 0191480 beschreibt eine Verfahren, wobei ein Polymer durch Eintauchen zunächst auf einen ganzen porösen Filter aufgebracht wird, eine Washcoat-Suspension danach in die Poren beladen wird und das Polymer schließlich pyrolytisch entfernt wird.

Der Erfindung liegt die Aufgabe zugrunde, ein Verfahren zu finden, mit dem ebene oder unebene Oberflächen schnell und gegebenenfalls automatisiert partiell beschichtet werden können. Insbesondere sollen dabei Formkörper mit einer Washcoat-Suspension beschichtet werden.

Diese Aufgabe wird gemäß dem Gegenstand des Anspruchs 1 durch ein Verfahren zur partiellen Beschichtung eines Formkörpers gelöst, dessen Oberfläche einen zu beschichtenden und einen auszusparenden Bereich umfasst, dadurch gekennzeichnet, dass bei dem Verfahren eine Schutzschicht auf den auszusparenden Bereich aufgetragen wird, eine Beschichtung auf die Oberfläche aufgetragen wird, wobei die Beschichtung aus einer Washcoat-Suspension besteht und der beschichtete Formkörper auf eine Temperatur erhitzt wird, bei der die Schutzschicht pyrolytisch rückstandsfrei entfernt wird.

Bei der Beschichtung handelt es sich um die Beschichtung, mit der der Formkörper an den gewünschten Stellen beschichtet werden soll. Bei dieser Beschichtung kann es sich in einem bevorzugten Verfahren um eine aushärtbare Beschichtung handeln, die bei Raumtemperatur oder bei erhöhter Temperatur aushärten kann. Denkbar ist auch eine Beschichtung, die durch Lichteinfluss aushärtet. Im Fall der Washcoat-Suspension härtet die Schicht beispielsweise bei 550 °C aus. Bei dieser Temperatur werden Washcoat-Suspensionen gewöhnlich kalziniert.

Durch das erfindungsgemäße Verfahren können Formkörper durch wenige und durch wenig aufwändige Schritte partiell beschichtet werden. Auf dem zu beschichtenden Bereich der Oberfläche des Formkörpers soll der Washcoat haften bleiben, während der auszusparende Bereich von der Washcoat-Beschichtung nach Durchführung des Verfahrens freibleiben soll. Indem zunächst die Schutzschicht auf den auszusparenden Bereich aufgetragen wird, hat die anschließend aufgetragene Washcoat-Suspension keinen unmittelbaren Kontakt zur Oberfläche des Formkörpers. Bei einer anschließenden Temperaturerhöhung wird das Material, aus dem die Schutzschicht besteht, pyrolisiert, so dass die Washcoat-Beschichtung delaminiert. "Pyrolytisch entfernen" bedeutet in diesem Zusammenhang, dass durch Pyrolyse die Schutzschicht entfernt bzw. abgebrannt wird. Bei einer Pyrolyse werden chemische Verbindungen thermisch gespalten, wobei durch hohe Temperaturen ein Bindungsbruch innerhalb von großen Molekülen erzwungen wird. Im Rahmen dieser Erfindung soll es stets so verstanden werden, dass dies sowohl durch Oxidation oder Partialoxidation, d.h. unter Sauerstoff- oder Luftatmosphäre, als auch ohne Sauerstoffzufuhr geschehen kann. Durch die Pyrolyse wird die Schutzschicht rückstandsfrei abgebrannt.

Das Verfahren eignet sich besonders bei der Herstellung von Beschichtungskatalysatoren. Gewöhnlich werden diese hergestellt, indem ein Katalysatorträgerkörper mit hochoberflächigen porösen katalytisch aktiven Metalloxiden beschichtet wird, wobei diese Metalloxide mittels einer sogenannten Washcoat-Suspension, d.h. einer Aufschlämmung der Metalloxide in einem fluiden Medium auf den Katalysatorträgerkörper aufgetragen werden. Gewöhnlich wird dann die aufgetragene Washcoat-Suspension getrocknet, danach gegebenenfalls mit einer aktiven Komponente imprägniert und anschließend durch Kalzinierung aktiviert. Die so hergestellte Beschichtung hat aufgrund des in der Washcoat-Suspension enthaltenen Keramikpulvers eine hohe Oberfläche, an der sich katalytisch aktive Edelmetalle befinden.

Gemäß der Erfindung wird die Schutzschicht durch Sprühen, Pinseln, Eintauchen oder Rollen auf den auszusparenden Bereich aufgetragen. Praktisch kann dabei das Material, das die Schutzschicht bildet, aufgeschlämmt oder in einem Lösungsmittel gelöst und anschließend auf den auszusparenden Bereich aufgetragen werden. Gegebenenfalls muss die Schutzschicht trocknen oder aushärten. Diese Verfahrensschritte sind die am wenigsten aufwändigen Schritte zur Auftragung einer Schutzschicht.

Gemäß einer weiteren bevorzugten Ausführungsform kann das Material, das die Schutzschicht bildet, einen Lack, ein Harz, ein Klebstoff, insbesondere einen handelsüblichen Klebstoff, oder ein Polymer umfassen. Bevorzugt umfasst das Material einen oder mehrere der folgenden Stoffe: Polyethylenglycol, Polypropylenglycol, Polyacrylat, Poly(meth)acrylat, Polybutyrat, Polyvinylacetat, Polyvinylalkohol, Polyolefin, Polyurethan, Polyethylenvinylacetat, oder ein Harz, wie beispielsweise Acrylharzlack, Epoxidharz, Melaminformaldehydharz oder Phenolformaldehydharz. Es soll im Rahmen dieser Erfindung so verstanden werden, daß die Polymere sowohl als Homopolymere wie auch als Copolymere beliebiger oben genannter Polymere als Materialen einsetzbar sind, die sich für die Schutzschicht eignen. Entscheidend bei der Wahl des die Schutzschicht aufbauenden Materials ist, dass sich das Material beim Auftragen der Washcoat-Suspension oder einem nachfolgenden Verfahrensschritt nicht mit der Washcoat-Suspension mischt, und dass das Material sich rückstandsfrei pyrolysieren lässt. Dies ist besonders bei Sauerstoff enthaltenden Polymeren der Fall. Daher sind Sauerstoff enthaltende Polymere als Material für die Schutzschicht ganz besonders bevorzugt.

Gemäß einer bevorzugten Ausführungsform des erfindungsgemäßen Verfahrens wird die Schutzschicht nach dem Auftragen zwischen zehn Sekunden und drei Stunden, bevorzugter zwischen fünf Minuten und 60 Minuten und noch bevorzugter zwischen fünf und 10 Minuten an Luft bei Raumtemperatur oder bei erhöhter Temperatur bis 120 °C getrocknet. Je nach Wahl des die Schutzschicht bildenden Materials kann es erforderlich sein, die Schutzschicht zu trocknen. Handelt es sich beispielsweise bei der Schutzschicht um einen Lack oder einen Klebstoff, kann es erforderlich sein, dass das Material aushärtet. Falls das die Schutzschicht bildende Material ein Polymer ist, kann dieses zuvor in einem Lösungsmittel gelöst werden, bevor es auf die entsprechenden Stellen aufgetragen wird, beispielsweise durch Sprühen, wobei es nötig sein kann, das Lösungsmittel nach der Auftragung verdampfen zu lassen.

Gemäß einem bevorzugten erfindungsgemäßen Verfahren zur partiellen Beschichtung eines Formkörpers mit einer Oberfläche, die einen zu beschichtenden und eine auszusparenden Bereich umfasst, wird zunächst eine Schutzschicht auf den auszusparenden Bereich aufgetragen und getrocknet, eine Washcoat-Suspension auf die Oberfläche aufgetragen, anschließend die Washcoat-Suspension getrocknet und kalziniert, und der beschichtete Formkörper auf eine Temperatur erhitzt, bei der die Schutzschicht durch Pyrolyse rückstandsfrei entfernt wird.

Gemäß einer besonders bevorzugten Ausführungsform wird die Washcoat-Suspension bei einer Temperatur zwischen 80 und 120 °C getrocknet. Die Washcoat-Suspension wird anschließend bei einer Temperatur zwischen 200 und 600 °C, bevorzugter zwischen 400 und 500 °C kalziniert. Es ist besonders bevorzugt, die Kalzinierung und die Pyrolyse bei derselben Temperatur durchzuführen. Damit werden Kalzinierung der Washcoat-Suspension und Pyrolyse der Schutzschicht in einem Verfahrensschritt durchgeführt. Im Gegensatz zu bekannten Verfahren zur partiellen Beschichtung von Formkörpern werden bei dieser bevorzugten Ausführungsform der Erfindung der beschichtete Bereich der Oberfläche und der ausgesparte Bereich der Oberfläche in einem Verfahrensschritt erhalten. Es müssen keine Schutzelemente wie beispielsweise Folien nach einer Beschichtung entfernt werden. Dieser Vorteil wird dadurch erzielt, dass die Fertigstellung der Beschichtung, d.h. das Kalzinieren, und die "Herstellung" des auszusparenden Bereiches auf der Oberfläche durch einmaliges Erhitzen auf eine Temperatur erreicht wird.

Gleichwohl kann die vollständige Entfernung von Resten des Washcoats auf den auszusparenden Bereichen durch weitere Verfahrensschritte beschleunigt werden. In einer bevorzugten Ausführungsform des erfindungsgemäßen Verfahrens wird der Formkörper nach dem Erhitzen gerüttelt. Dadurch werden übrig gebliebne Reste der Washcoat-Beschichtung von den auszusparenden Bereichen delaminiert. Unter Rütteln soll im Rahmen dieser Erfindung auch ein einmaliges Anstoßen des beschichteten Formkörpers verstanden werden.

Alternativ kann in einem bevorzugten Verfahren der auszusparende Bereich der Oberfläche nach der Pyrolyse mit einem Pinsel überstrichen werden oder einem Druckluftstrahl ausgesetzt werden. Dadurch werden geringfügige Reste oder Staub von dem auszusparenden Bereich entfernt.

Ganz besonders bevorzugt eignet sich das Verfahren, um Bereiche eines Formkörpers von Washcoat-Beschichtungen freizuhalten, die mit Beschriftungen, insbesondere mit einem Barcode versehen sind. Beispielsweise können auch beschriftete Bereiche von zu beschichtenden Formkörpern prophylaktisch mit einer Schutzschicht versehen werden, die anschließend pyrolysiert wird. Damit werden aufwändigere Reinigungsschritte vermieden.

Besonders vorteilhaft wird dieses Verfahren verwendet zur Beschichtung von metallischen oder keramischen Katalysatorträgerkörpern oder von Wärmetauschern. Das erfindungsgemäße Verfahren ist somit besonders bevorzugt zur partiellen Beschichtung von Formkörpern, die eine Schaumstruktur, einen Wabenkörper oder einen Mikrowärmetauscher darstellen.

Für diese Formkörper ist das Verfahren besonders vorteilhaft, da die Formkörper über strukturierte Oberflächen verfügen, die heterogen sind und sich daher durch die im Stand der Technik, insbesondere in der DE-A-43 34 131, beschriebenen Verfahren schwer oder gar nicht maskieren lassen, um anschließend die Beschichtung nur auf die gewünschten Stellen des Formkörpers aufzutragen.

Im Folgenden soll die erfindungsgemäße Lehre anhand einer Figur und eines Beispiels näher erläutert werden. Diese sollen nicht einschränkend für sämtliche erfindungsgemäße Verfahren verstanden werden.

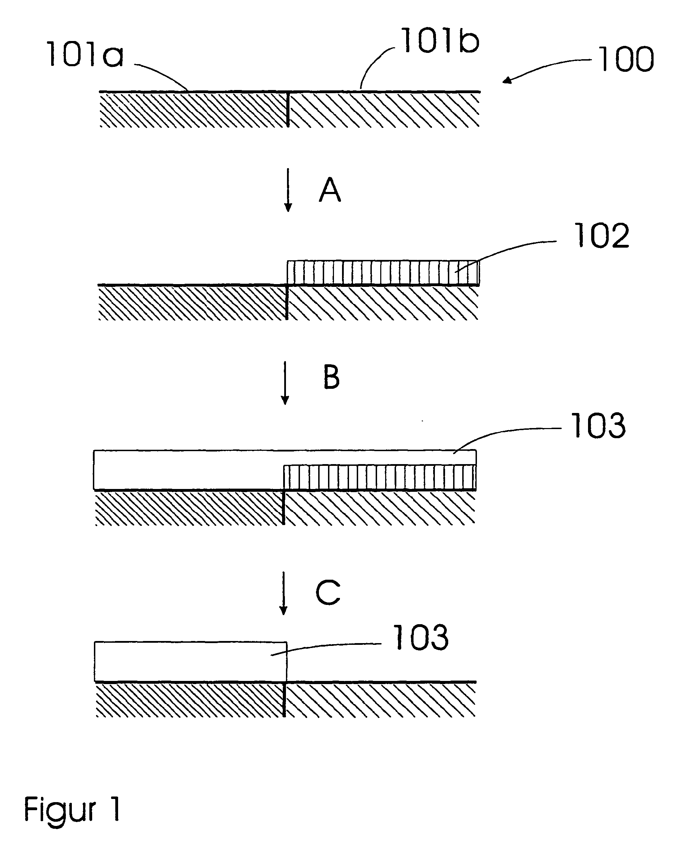

Fig. 1: Schematische Darstellung des erfindungsgemäßen Verfahrens umfassend die Schritte A bis C.

Figur 1 zeigt oben einen Formkörper (100) dessen Oberfläche aus einem zu beschichtenden Bereich (101a) und einem auszusparenden Bereich (101b) besteht. In Verfahrensschritt A wird eine Schutzschicht (102) auf den auszusparenden Bereich (101b) aufgetragen. Anschließend wird in Verfahrensschritt B auf die gesamte Oberfläche des Formkörpers (100) die Schicht aus einer Washcoat-Suspension (103) aufgetragen. Anschließend wird in einem Verfahrensschritt C der beschichtete Formkörper erhitzt, so dass das Material, aus der die Schutzschicht (102) besteht, pyrolisiert wird. Der Kontakt zwischen Bestandteilen der Washcoat-Suspension und der Oberfläche des Formkörpers (100) im auszusparenden Bereich (101b) geht somit verloren, so dass die Schichten in dem Bereich delaminieren und lediglich der zu beschichtende Bereich (101a) beschichtet bleibt.

### Ausführungsbeispiel

Eine Metalloberfläche, die drei Stunden auf 1000 °C erhitzt wird, wird in fünf Teilbereiche unterteilt, die von 1 bis 5 nummeriert werden. Teilbereich 1 bleibt unbehandelt, erhält also keine Schutzschicht. Teilbereich 2 wird mit Plastikspray 70 (CRC Industries Deutschland GmbH, Iffezheim) beschichtet. Dabei handelt es sich um einen Acrylharzlack, der unbehandelt bleibt. Teilbereich 3 wird mit einer Polybutyrat Schutzschicht versehen, Teilbereich 4 wird mit einer Schicht aus UHU-Kleber versehen und auf Teilbereich 5 wird eine Schicht Vinapas aufgetragen. Dabei handelt es sich um das Produkt EP 65 W (Firma Wacker-Chemie), eine Zusammensetzung, die im Wesentlichen Polyvinylacetat enthält. Anschließend werden alle Teilbereiche zwei Stunden lang bei 80 °C getrocknet und in eine Washcoat-Suspension (Herstellung: siehe Beispiel 3 der US-A-4 900 712) getaucht, die anschließend erneut zwei Stunden lang bei 80 °C getrocknet wird. Das beschichtete Metallblech wird anschließend drei Stunden lang auf eine Temperatur von 550 °C erhitzt. Nach dem Kalzinieren wird das beschichtete Metallblech einmalig auf den Tisch aufgeklopft. Anschließend wird die Beschichtungsdichte auf der Oberfläche geprüft. Während die unbehandelte Fläche (Teilbereich 1) fast vollständig (90 bis 100% der Fläche) mit einer Washcoat-Schicht beschichtet bleibt, sind die übrigen Teilbereiche (Teilbereich 2 bis 5) von einer Washcoat-Schicht befreit. Im Fall der Polybutyrat-Schutzschicht (Teilbereich 3) bleibt zunächst eine restliche Beschichtungsmasse haften, die durch einmaliges Überstreichen des Metallblechs mit einem Pinsel vollständig entfernt wird.

## Patentansprüche

1. Verfahren zur partiellen Beschichtung eines Formkörpers, dessen Oberfläche einen zu beschichtenden und einen auszusparenden Bereich umfasst, **dadurch gekennzeichnet, dass** bei dem Verfahren
a) eine Schutzschicht durch Sprühen, Pinseln, Eintauchen oder Rollen ausschließlich auf den auszusparenden Bereich der Oberfläche des Formkörpers aufgetragen wird,
b) eine Beschichtung auf die Oberfläche aufgetragen wird, wobei die Beschichtung aus einer Washcoat-Suspension besteht, die eine Aufschlämmung von Metall-Oxiden ist, und der beschichtete Formkörper auf eine Temperatur erhitzt wird, bei der die Schutzschicht pyrolytisch rückstandsfrei entfernt wird.

2. Verfahren nach Anspruch 1, **dadurch gekennzeichnet, dass** die Beschichtung eine aushärtbare Beschichtung ist.

3. Verfahren nach einem der vorhergehenden Ansprüche, **dadurch gekennzeichnet, daß** als Schutzschicht ein Lack, ein Harz, ein Klebstoff, insbesondere ein handelsüblicher Klebstoff, oder ein Polymer verwendet wird.

4. Verfahren nach Anspruch 3, **dadurch gekennzeichnet, dass** ein Polymer umfassend Polyethylenglycol, Polypropylenglycol, Polyacrylat, Poly(meth)acrylat, Polybutyrat, Polyvinylacetat, Polyvinylalkohol, Polyolefin, Polyurethan oder Polyethylenvinylacetat verwendet wird.

5. Verfahren nach Anspruch 3, **dadurch gekennzeichnet, daß** ein Harz umfassend Phenolformaldehydharz, Epoxidharz, Melaminformaldehydharz oder Acrylharzlack verwendet wird.

6. Verfahren nach einem der vorhergehenden Ansprüche, **dadurch gekennzeichnet, daß** die Schutzschicht nach dem Auftragen zwischen zehn Sekunden und drei Stunden, bevorzugter zwischen fünf Minuten und 60 Minuten, noch bevorzugt zwischen fünf und zehn Minuten getrocknet wird.

7. Verfahren nach einem der vorhergehenden Ansprüche, **dadurch gekennzeichnet, dass** die Washcoat-Suspension nach dem Auftragen getrocknet und kalziniert wird.

8. Verfahren nach Anspruch 7, **dadurch gekennzeichnet, dass** die Washcoat-Suspension bei einer Temperatur zwischen 80 und 120 °C getrocknet wird.

9. Verfahren nach Anspruch 7 oder Anspruch 8, **dadurch gekennzeichnet, dass** die Washcoat-Suspension bei Temperaturen zwischen 200 und 600 °C kalziniert wird.

10. Verfahren nach einem der vorhergehenden Ansprüche, dadurch gekenntzeichnet, dass der Formkörper nach der Pyrolyse gerüttelt wird.

11. Verfahren nach einem der vorhergehenden Ansprüche, **dadurch gekennzeichnet, dass** der Bereich der Oberfläche, auf dem die Schutzschicht aufgetragen wurde, nach der Pyrolyse mit einem Pinsel überstrichen wird oder einem Druckluftstrahl ausgesetzt wird.

12. Verfahren nach einem der vorhergehenden Ansprüche, **dadurch gekennzeichnet dass** der auszusparende Bereich mit einer Beschriftung oder mit einem Barcode versehen ist.

13. Verfahren nach einem der vorhergehenden Ansprüche, **dadurch gekennzeichnet, dass** der Formkörper ein metallischer oder keramischer Katalysatorträgerkörper oder Wärmetauscher ist.

14. Verfahren nach einem der vorhergehenden Ansprüche, **dadurch gekennzeichnet, dass** der Formkörper eine Schaumstruktur, einen Wabenkörper oder einen Mikrowärmetauscher darstellt.

15. Verwendung einer pyrolytisch rückstandsfrei entfernbaren Schutzschicht zur partiellen Beschichtung eines Formkörpers, dessen Oberfläche einen zu beschichtenden und einen auszusparenden Bereich umfasst, wobei ein Verfahren nach einem der vorstehenden Ansprüche durchgeführt wird.

## Claims

1. Method for partially coating a shaped body, the surface of which comprises an area to be coated and an area to be left clear, **characterized in that**, with the method,
a) a protective layer is applied exclusively to the area to be left clear of the surface of the shaped body by spraying, brushing, dipping or rolling,
b) a coating is applied to the surface, wherein the coating consists of a washcoat suspension which is a slurry of metal oxides,
and
the coated shaped body is heated to a temperature at which the protective layer is pyrolytically removed residue-free.

2. Method according to claim 1, **characterized in that** the coating is a curable coating.

3. Method according to one of the previous claims, **characterized in that** a lacquer, a resin, an adhesive, in particular an adhesive customary in the trade, or a polymer is used as protective layer.

4. Method according to claim 3, **characterized in that** a polymer comprising polyethylene glycol, polypropylene glycol, polyacrylate, poly(meth)acrylate, polybutyrate, polyvinyl acetate, polyvinyl alcohol, polyolefin, polyurethane or polyethylene vinyl acetate is used.

5. Method according to claim 3, **characterized in that** a resin comprising phenol-formaldehyde resin, epoxide resin, melamine-formaldehyde resin or acrylic resin lacquer is used.

6. Method according to one of the previous claims, **characterized in that** the protective layer is dried, after the application, for between ten seconds and three hours, more preferably between five minutes and 60 minutes, still more preferably between five and ten minutes.

7. Method according to one of the previous claims, **characterized in that** the washcoat suspension is dried and calcined after the application.

8. Method according to claim 7, **characterized in that** the washcoat suspension is dried at a temperature of between 80 and 120°C.

9. Method according to claim 7 or claim 8, **characterized in that** the washcoat suspension is calcined at temperatures of between 200 and 600°C.

10. Method according to one of the previous claims, **characterized in that** the shaped body is shaken after the pyrolysis.

11. Method according to one of the previous claims, **characterized in that** the area of the surface to which the protective layer has been applied is swept with a brush or exposed to a jet of compressed air after the pyrolysis.

12. Method according to one of the previous claims, **characterized in that** the area to be left clear is provided with an imprint or with a barcode.

13. Method according to one of the previous claims, **characterized in that** the shaped body is a metal or ceramic catalyst support body or heat exchanger.

14. Method according to one of the previous claims, **characterized in that** the shaped body represents a foam structure, a honeycomb body or a micro heat exchanger.

15. Use of a protective layer that can be pyrolytically removed residue-free for partially coating a shaped body, the surface of which comprises an area to be coated and an area to be left clear, wherein a method according to one of the previous claims is carried out.

## Revendications

1. Procédé destiné au revêtement partiel d'un corps moulé dont la surface comprend une zone à revêtir et une zone ne devant pas recevoir de revêtement, **caractérisé en ce que**, lors dudit procédé,
a) on applique sélectivement, par pulvérisation, au pinceau, par immersion ou au rouleau, une couche protectrice, de façon à ce qu'elle se situe exclusivement dans la zone de la surface du corps moulé ne devant pas recevoir de revêtement,
b) on applique un revêtement sur la surface, ledit revêtement étant constitué d'une suspension de type « washcoat », à savoir une suspension d'oxydes de métaux, et le corps moulé revêtu étant chauffé à une température permettant d'enlever ladite couche protectrice par pyrolyse, sans laisser aucun résidu.

2. Procédé selon la revendication 1, **caractérisé en ce que** ledit revêtement est un revêtement durcissable.

3. Procédé selon l'une des revendications précédentes, **caractérisé en ce que** l'on utilise, en tant que couche protectrice, un vernis, une résine, un agent adhésif, notamment un agent adhésif disponible dans le commerce, ou un polymère.

4. Procédé selon la revendication 3, **caractérisé en ce que** l'on utilise un polymère comprenant du polyéthylène glycol, du polypropylène glycol, du polyacrylate, du poly(méth)acrylate, du polybutyrate, de l'acétate de polyvinyle, de l'alcool polyvinylique, de la polyoléfine, du polyuréthane ou de l'acétate de polyethylènevinyle.

5. Procédé selon la revendication 3, **caractérisé en ce que** l'on utilise une résine comprenant de la résine phénol-formaldéhyde, de la résine époxyde, de la résine mélamine-formaldéhyde ou du vernis de résine acrylique.

6. Procédé selon l'une des revendications précédentes, **caractérisé en ce que** l'on fait sécher ladite couche protectrice après son application pour une durée comprise dix secondes et trois heures, plus préférentiellement comprise entre cinq minutes et 60 minutes, encore plus préférentiellement comprise entre cinq et dix minutes.

7. Procédé selon l'une des revendications précédentes, **caractérisé en ce que** ladite suspension de type « washcoat » est séchée et calcinée après son application.

8. Procédé selon la revendication 7, **caractérisé en ce que** ladite suspension de type « washcoat » est séchée à une température comprise entre 80 et 120 °C.

9. Procédé selon la revendication 7, **caractérisé en ce que** ladite suspension de type « washcoat » est calcinée à des températures comprises entre 200 et 600 °C.

10. Procédé selon l'une des revendications précédentes, **caractérisé en ce qu'**après ladite pyrolyse, ledit corps moulé est soumis à des secousses.

11. Procédé selon l'une des revendications précédentes, **caractérisé en ce qu'**après ladite pyrolyse, la zone de la surface sur laquelle on a appliqué ladite couche protectrice est traitée au pinceau ou exposée à un jet d'air comprimé.

12. Procédé selon l'une des revendications précédentes, **caractérisé en ce que** ladite zone ne devant pas recevoir de revêtement est pourvue d'une information écrite ou d'un code-barres.

13. Procédé selon l'une des revendications précédentes, **caractérisé en ce que** ledit corps moulé est un corps métallique ou céramique servant de support pour un catalyseur ou bien un échangeur de chaleur.

14. Procédé selon l'une des revendications précédentes, **caractérisé en ce que** ledit corps moulé représente une structure en mousse, un corps en nid d'abeilles ou un micro-échangeur de chaleur.

15. Utilisation d'une couche protectrice pouvant être enlevée par pyrolyse sans laisser aucun résidu, pour partiellement revêtir un corps moulé dont la surface comprend une zone à revêtir et une zone ne devant pas recevoir de revêtement, avec mise en oeuvre d'un procédé selon l'une des revendications précédentes.
